# EUROPÄISCHE PATENTSCHRIFT

(11) **EP 2 632 644 B1**
(45) Veröffentlichungstag und Bekanntmachung des Hinweises auf die Patenterteilung: **28.12.2016**
(21) Anmeldenummer: 11757890.6
(22) Anmeldetag: 21.09.2011
(51) Int. Cl.: B25B 23/14, B25F 5/00, B25D 16/00, F16D 7/08, F16D 7/10, F16D 43/206, F16D 43/208, B23B 45/00, B23Q 11/04, F16D 7/02, F16D 43/21, B23Q 5/58

(54) **ÜBERLASTKUPPLUNG**
OVERLOAD COUPLING
ACCOUPLEMENT DE SURCHARGE

(30) Priorität: 27.10.2010 DE 102010042981
(43) Veröffentlichungstag der Anmeldung: 04.09.2013
(73) Patentinhaber: Robert Bosch GmbH, 70442 Stuttgart (DE)
(72) Erfinder: BRAUN, Willy, 72149 Neustetten (DE)
(86) Internationale Anmeldenummer: PCT/EP2011/066374
(87) Internationale Veröffentlichungsnummer: WO 2012/055640

(56) Entgegenhaltungen:
- DE-A1- 2 944 275
- DE-A1- 10 002 748
- DE-A1-102006 057 283
- DE-A1-102008 002 591
- DE-B- 1 146 377
- US-B1- 6 832 533

## Beschreibung

### Stand der Technik

Aus der DE 100 02 748 A1 ist bereits eine Werkzeugmaschinenvorrichtung, insbesondere eine Bohrhammer- und/oder Meißelvorrichtung, mit einer Drehmomentbegrenzungseinheit, die in zumindest einem Betriebszustand dazu vorgesehen ist, in einem Antriebsstrang ein Drehmoment zu begrenzen und die sieben Kraftübertragungsmittel aufweist, die in zumindest einem Betriebszustand dazu vorgesehen sind, das Drehmoment zu übertragen, bekannt.

In der Druckschrift DE 29 44 275 A1 ist ein motorisch betriebenes Handwerkzeug, insbesondere ein Bohrhammer mit einer in der Getriebekette zwischen dem Antriebsmotor und der Arbeitsspindel angeordneten, bei Drehmomentüberlastung die Kraftübertragung unterbrechenden Sicherheitskupplung mit einer auf einer Welle angeordneten Nabe und einem über Kupplungsglieder mit der Nabe verbundenen Kranz beschrieben.

In der Druckschrift DE 10 2008 002591 A1 ist eine Kupplungsvorrichtung mit einer zentralen Kupplungswelle beschrieben, die mindestens zwei zwischen einer Eingangsseite und einer Ausgangsseite der Kupplungsvorrichtung ein maximales Grenzdrehmoment übertragende Kupplungsmittel aufweist, wobei die Kupplungsvorrichtung als Überrastkupplung ausgebildet ist.

### Offenbarung der Erfindung

Die Erfindung geht aus von einer Werkzeugmaschinenvorrichtung, insbesondere einer Bohrhammer- und/oder Meißelvorrichtung, mit zumindest einer Drehmomentbegrenzungseinheit, die in zumindest einem Betriebszustand dazu vorgesehen ist, in einem Antriebsstrang ein Drehmoment zu begrenzen und die zumindest zwei Kraftübertragungsmittel aufweist, die in zumindest einem Betriebszustand dazu vorgesehen sind, das Drehmoment zu übertragen.

Es wird vorgeschlagen, dass die zumindest zwei Kraftübertragungsmittel unterschiedliche Übertragungscharakteristiken aufweisen. Dadurch können die Kraftübertragungsmittel funktionell und zeitlich voneinander getrennt werden, wodurch bei gleichzeitiger Vermeidung von unzulässig hohen Belastungen eines Bedieners einer die Werkzeugmaschinenvorrichtung aufweisenden Werkzeugmaschine eine Zuverlässigkeit der Werkzeugmaschine erhöht werden kann. Dadurch kann insbesondere in einem Blockierfall, in dem hohe Belastungen entstehen können, der Bediener geschützt und gleichzeitig ein genügend hohes Drehmoment bereitgestellt werden, wodurch ein Bedienkomfort der Werkzeugmaschine insbesondere in dem Blockierfall erhöht werden kann. Unter einer "Übertra-gungscharakteristik" soll dabei insbesondere eine Summe von Eigenschaften eines einzigen Kraftübertragungsmittels verstanden werden, die insgesamt eine Kopplung und/oder eine Kraftübertragung zwischen zwei drehbaren Kupplungselementen, insbesondere relativ zueinander drehbaren Kupplungselementen, der Drehmomentbegrenzungseinheit definieren. Unter einer "unterschiedlichen Übertragungscharakteristik" soll insbesondere verstanden werden, dass zumindest eine Eigenschaft des einen Kraftübertragungsmittels sich von einer Eigenschaft des anderen Kraftübertragungsmittels unterscheidet, wodurch die zumindest zwei Kraftübertragungsmittel unterschiedliche Kopplungen und/oder unterschiedliche Kraftübertragungen definieren. Vorteilhafterweise ist die Übertragungscharakteristik als eine mechanische Übertragungscharakteristik ausgebildet, wie beispielsweise eine Summe von Reibkräften und/oder eine Summe von Druckkräften und/oder eine Summe von Betätigungskräften, wodurch sich vorteilhafterweise die Kraftübertragung, die durch das wenigstens eine erste Kraftübertragungsmittel definiert ist, beispielsweise durch eine maximal übertragbare Kraft und/oder ein mechanisches Ansprechverhalten und/oder ein Auslöseverhalten von der Kraftübertragung, die durch das wenigstens eine zweite Kraftübertragungsmittel definiert ist, unterscheidet. Unter einer "Kraftübertragung" soll dabei insbesondere eine Drehmomentübertragung verstanden werden. Unter einem "Kraftübertragungsmittel" soll insbesondere ein Mittel verstanden werden, das zur Übertragung des Drehmoments eine Kopplung zwischen den zwei Kupplungselementen herstellt. Vorzugsweise weisen die zumindest zwei Kraftübertragungsmittel die unterschiedlichen Übertragungscharakteristiken in wenigstens einer Drehposition der zumindest zwei Kupplungselemente auf. Besonders bevorzugt weisen die Kraftübertragungsmittel die unterschiedlichen Übertragungscharakteristiken in sämtlichen möglichen Drehpositionen der zumindest zwei Kupplungselemente auf. Unter einer "Drehposition der zumindest zwei Kupplungselemente" soll dabei insbesondere eine Position verstanden werden, die eine Stellung der zumindest zwei Kupplungselemente relativ zueinander beschreibt.

Des Weiteren weisen die zumindest zwei Kraftübertragungsmittel zur Ausbildung der unterschiedlichen Übertragungscharakteristiken unterschiedliche Wirkrichtungen auf. Dadurch kann besonders einfach eine Belastung der Kraftübertragungsmittel reduziert werden, wodurch ein Verschleiß der Drehmomentbegrenzungseinheit verringert werden kann. Unter einer "Wirkrichtung" soll insbesondere eine Richtung verstanden werden, entlang der zumindest ein Teil der Kraftübertragungsmittel bewegbar ist. Unter "unterschiedlichen Wirkrichtungen" soll insbesondere in Bezug auf eine Rotationsachse asymmetrische Wirkrichtungen verstanden werden, d.h. Wirkrichtungen, die durch eine Drehbewegung um die Rotationsachse nicht ineinander überführbar sind, wie beispielweise zwei Wirkrichtungen, die mit der Rotationsachse einen unterschiedlichen Winkel einschließen.

Vorteilhafterweise weist zumindest eines der Kraftübertragungsmittel eine zumindest im Wesentlichen radiale Wirkrichtung und zumindest eines der Kraftübertragungsmittel eine zumindest im Wesentlichen axiale Wirkrichtung auf. Dadurch kann eine besonders vorteilhafte Kombination der Übertragungscharakteristiken realisiert und eine Ausnutzung eines vorhandenen Bauraums erhöht werden, wodurch eine Leistungsdichte der Drehmomentbegrenzungseinheit erhöht werden kann. Unter einer "radialen Wirkrichtung" soll insbesondere eine Wirkrichtung verstanden werden, die radial, d.h. senkrecht zu einer Rotationsachse der Drehmomentbegrenzungseinheit orientiert ist. Unter einer "axialen Wirkrichtung" soll insbesondere eine Wirkrichtung verstanden werden, die axial, d. h. parallel zu einer Rotationsachse der Drehmomentbegrenzungseinheit orientiert ist. Unter "im Wesentlichen" soll eine Winkelabweichung von maximal 5 Grad, vorzugsweise maximal 3 Grad und besonders bevorzugt von maximal 1 Grad in Bezug auf die axiale Wirkrichtung oder die radiale Wirkrichtung verstanden werden. Vorzugsweise ist die Rotationsachse als eine Hauptrotationsachse ausgebildet. Grundsätzlich kann die Rotationsachse auch als eine nebengeordnete Rotationsachse der Drehmomentbegrenzungseinheit ausgebildet sein.

Ferner wird vorgeschlagen, dass die Kraftübertragungsmittel zur Ausbildung der unterschiedlichen Übertragungscharakteristiken wenigstens teilweise unterschiedliche Rastelemente aufweisen, die zur Übertragung des Drehmoments für einen im Wesentlichen formschlüssigen Eingriff vorgesehen sind. Dadurch können Freiheitsgrade zur Anpassung und Optimierung der Drehmomentbegrenzungseinheit erhöht werden. Vorzugsweise weisen die Kraftübertragungsmittel federbelastete Rastelemente auf.

Vorzugsweise weisen die Rastelemente der zumindest zwei Kraftübertragungsmittel zumindest teilweise unterschiedliche Formen auf. Dadurch können besonders einfach die Übertragungscharakteristiken variiert werden, wodurch Freiheitsgrade zur Anpassung und Optimierung der Drehmomentbegrenzungseinheit besonders einfach bereitgestellt werden können. Vorzugsweise können sich die Rastelemente zusätzlich oder alternativ durch ein Material, eine Härte, eine Größe usw. unterscheiden.

Des Weiteren wird vorgeschlagen, dass die Kraftübertragungsmittel zur Ausbildung der unterschiedlichen Übertragungscharakteristiken wenigstens teilweise unterschiedliche Kraftspeicherelemente aufweisen. Dadurch können die Freiheitsgrade zur Anpassung und Optimierung der Drehmomentbegrenzungseinheit weiter erhöht werden. Unter einem "Kraftspeicherelement" soll dabei insbesondere ein Element verstanden werden, das dazu vorgesehen ist, bei einer einwirkenden Kraft mechanisch verformt zu werden und diese Kraft bei einer Rückformung in eine ursprüngliche Form wieder abzugeben, wie insbesondere ein Federelement oder ein Gummielement.

Vorteilhafterweise weisen die Kraftspeicherelemente der zumindest zwei Kraftübertragungsmittel unterschiedliche Federkonstanten auf, wodurch ein Wirken der Kraftübertragungsmittel vorteilhaft zeitlich versetzt werden kann. Vorzugsweise können sich die Kraftspeicherelemente zusätzlich oder alternativ durch ein Material, eine Größe, eine Länge, einer Art usw. unterscheiden.

Vorzugsweise weist die Drehmomentbegrenzungseinheit zumindest ein Kupplungselement auf, das zumindest eine radial wirkende Eingriffskontur und zumindest eine axial wirkende Eingriffskontur umfasst. Dadurch kann die Ausnutzung des Bauraums weiter verbessert werden. Vorzugsweise ist das Kupplungselement als ein Antriebselement ausgebildet. Unter einem "Antriebselement" soll insbesondere ein Element verstanden werden, das mit einer Antriebswelle der Werkzeugmaschinenvorrichtung gekoppelt ist. Unter "radial wirkend" soll insbesondere verstanden werden, dass ein Eingriff, insbesondere ein im Wesentlichen formschlüssiger Eingriff in die Eingriffskontur radial, d.h. senkrecht zur Rotationsachse der Drehmomentbegrenzungseinheit erfolgt. Unter "axial wirkend" soll insbesondere verstanden werden, dass ein Eingriff, insbesondere ein im Wesentlichen formschlüssiger Eingriff in die Eingriffskontur axial, d.h. parallel zur Rotationsachse der Drehmomentbegrenzungseinheit erfolgt.

In einer vorteilhaften Ausgestaltung weist die Drehmomentbegrenzungseinheit wenigstens eine Eingriffskontur auf, die eine Rastausnehmung umfasst, in die die zumindest zwei Kraftübertragungsmittel zumindest teilweise formschlüssig eingreifen. Dadurch kann eine Veränderung schon vorhandener Drehmomentbegrenzungseinheiten reduziert werden, wodurch Aufwand und Kosten verringert werden können. Vorzugsweise weist die Eingriffskontur zumindest zwei Rastausnehmungen auf, in die jeweils zumindest zwei Kraftübertragungsmittel zumindest teilweise eingreifen. Vorteilhafterweise greifen die Kraftübertragungsmittel radial versetzt in die Rastausnehmung ein. Vorzugsweise greifen die Rastelemente der zumindest zwei Kraftübertragungsmittel in die Rastausnehmung ein. Die in die Rastausnehmung eingreifenden Rastelemente können vorzugsweise gleich oder unterschiedlich ausgebildet sein. Unter einer "Eingriffskontur" soll insbesondere eine Summe der Rastausnehmungen verstanden werden, die einen Verlauf der Rastausnehmungen beschreibt, wobei die Eingriffskontur auch eine einzige Rastausnehmung aufweisen kann.

Insbesondere ist es vorteilhaft, wenn zumindest eines der Kraftübertragungsmittel für eine zumindest im Wesentlichen reibschlüssige Verbindung und zumindest eines der Kraftübertragungsmittel für eine zumindest im Wesentlichen formschlüssige Verbindung vorgesehen ist. Dadurch können ungewollte dynamische Effekte gedämpft werden. Unter einer "im Wesentlichen reibschlüssigen Verbindung" soll insbesondere eine Verbindung verstanden werden, bei der zwischen zumindest zwei aneinander liegenden Flächen eine Verbindungskraft entlang der Flächen größer ist als eine Verbindungskraft senkrecht zu den Flächen. Unter einer "im Wesentlichen formschlüssigen Verbindung" soll insbesondere eine Verbindung verstanden werden, bei der zwischen zumindest zwei aneinander liegenden Flächen eine Verbindungskraft senkrecht zu den Flächen größer ist als eine Verbindungskraft entlang der Flächen.

Außerdem wird vorgeschlagen, dass die Drehmomentbegrenzungseinheit zumindest ein weiteres Kraftübertragungsmittel aufweist, das eine gleiche Übertragungscharakteristik aufweist wie eines der zumindest zwei Kraftübertragungsmittel. Dadurch können die Kraftübertragungsmittel ausgeglichener ausgelegt und eine Leistungsdichte der Drehmomentbegrenzungseinheit erhöht werden. Grundsätzlich können die Kraftübertragungsmittel um ein und dieselbe Rotationsachse oder um zwei verschiedene Rotationsachsen angeordnet werden.

Die Erfindung geht ferner aus von einer Werkzeugmaschine, insbesondere einem Bohr- und/oder Meißelhammer, mit einer erfindungsgemäßen Werkzeugmaschinenvorrichtung. Dadurch kann eine Werkzeugmaschine bereitgestellt werden, die eine hohe Zuverlässigkeit und einen hohen Schutz für den Bediener aufweist.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine als Bohrhammer ausgebildete Werkzeugmaschine,
- Fig. 2: teilweise einen Antriebsstrang der Werkzeugmaschine mit einer Werkzeugmaschinenvorrichtung in einen Längsschnitt,
- Fig. 3: eine Drehmomentbegrenzungseinheit der Werkzeugmaschinenvorrichtung in einem Querschnitt entlang Schnittlinien III-III,
- Fig. 4: die Drehmomentbegrenzungseinheit in einem Längsschnitt entlang Schnittlinien IV-IV,
- Fig. 5: eine alternativ ausgebildete Drehmomentbegrenzungseinheit in dem Längsschnitt entlang den Schnittlinien IV-IV,

### Beschreibung der Ausführungsbeispiele

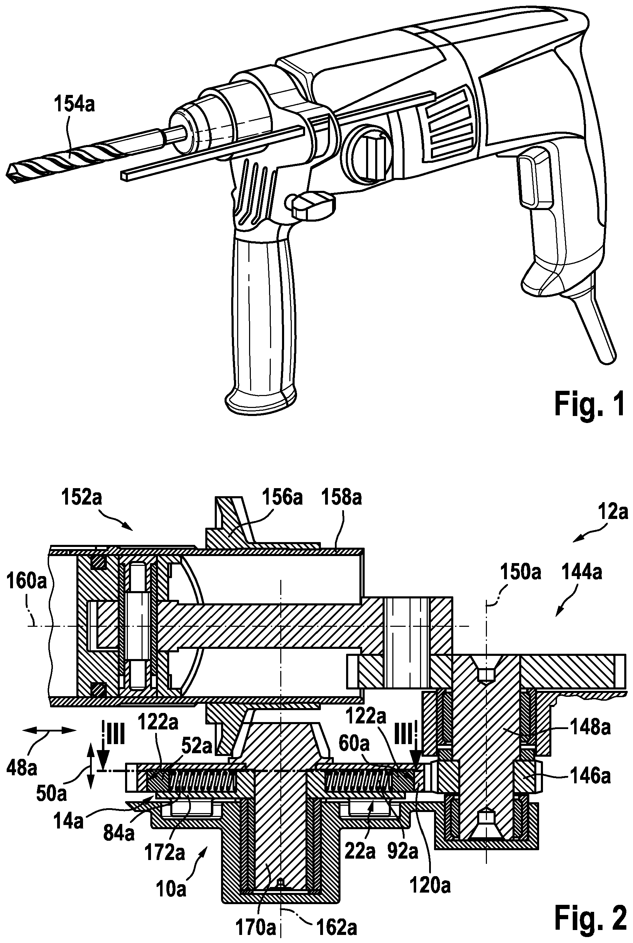

Die Figur 1 zeigt eine Werkzeugmaschine. Die Werkzeugmaschine weist eine erfindungsgemäße Werkzeugmaschinenvorrichtung auf. Die Werkzeugmaschine ist als eine Handwerkzeugmaschine ausgebildet. Die Werkzeugmaschinenvorrichtung ist als eine Handwerkzeugmaschinenvorrichtung ausgebildet. Die Werkzeugmaschine ist als ein Bohrhammer ausgebildet. Die Werkzeugmaschinenvorrichtung ist als eine Bohrhammervorrichtung ausgebildet. Die Figuren 2 bis 4 zeigen die Werkzeugmaschinenvorrichtung. In der Figur 2 ist ein Ausschnitt eines Antriebsstrangs 12a der Werkzeugmaschine mit der Werkzeugmaschinenvorrichtung dargestellt. Die Figur 2 zeigt einen Ausschnitt des Antriebsstrangs 12a in einem Längsschnitt durch die Werkzeugmaschine.

Zur Bereitstellung eines Drehmoments weist die Werkzeugmaschinenvorrichtung eine Antriebseinheit 144a auf. Die Antriebseinheit 144a weist ein Übertragungselement 146a und eine Antriebswelle 148a auf. Die Antriebswelle 148a weist eine Längsachse 150a auf. Die Längsachse 150a entspricht einer Rotationsachse der Antriebswelle 148a. Das Übertragungselement 146a ist drehfest auf der Antriebswelle 148a angeordnet. Die Antriebseinheit 144a ist als ein Exzenterantrieb ausgebildet. Das Übertragungselement 146a ist als ein Exzenterstirnrad ausbildendes Zahnradelement ausgebildet.

Zur Ausleitung des Drehmoments weist die Werkzeugmaschinenvorrichtung eine Abtriebseinheit 152a auf. Die Abtriebseinheit 152a betätigt mit dem Drehmoment ein Einsatzwerkzeug 154a der Werkzeugmaschine. Die Abtriebseinheit 152a weist ein Übertragungselement 156a und eine Abtriebswelle 158a auf. Die Abtriebswelle 158a ist fest mit dem Einsatzwerkzeug 154a der Werkzeugmaschine gekoppelt. Die Abtriebswelle 158a weist eine Längsachse 160a auf. Das Übertragungselement 156a ist drehfest mit der Abtriebswelle 158a und somit mit dem Einsatzwerkzeug 154a verbunden. Das Übertragungselement 156a ist verdrehsicher auf der Abtriebswelle 158a angeordnet. Das Übertragungselement 156a ist als ein Tellerrad ausbildendes Zahnradelement ausgebildet. Die Abtriebswelle 158a ist als eine Hohlwelle ausgebildet. Die Abtriebswelle 158a bildet ein Hammerrohr aus.

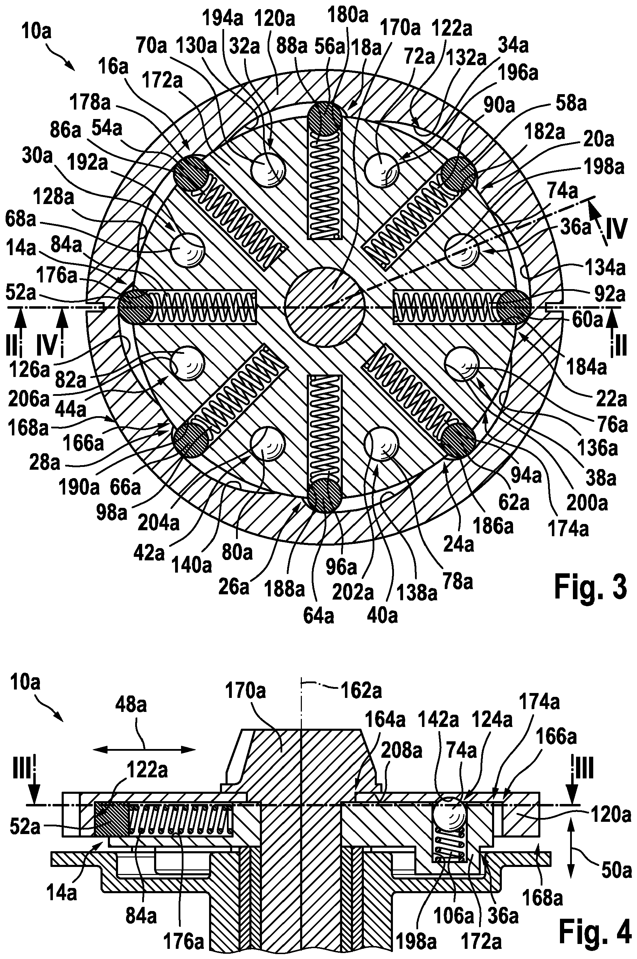

Zur Übertragung und zur Begrenzung des Drehmoments in dem Antriebsstrang 12a weist die Werkzeugmaschinenvorrichtung eine Drehmomentbegrenzungseinheit 10a auf. Die Drehmomentbegrenzungseinheit 10a überträgt und begrenzt das Drehmoment zwischen der Antriebseinheit 144a und der Abtriebseinheit 152a. Die Drehmomentbegrenzungseinheit 10a ist in der Figur 3 in einem Querschnitt entlang Schnittlinien III-III aus der Figur 2 und der Figur 4 dargestellt. In der Figur 4 ist die Drehmomentbegrenzungseinheit 10a in einem Längsschnitt entlang Schnittlinien IV-IV aus der Figur 3 dargestellt. In der Figur 2 ist die Drehmomentbegrenzungseinheit 10a in einem Längsschnitt entlang Schnittlinien II-II aus der Figur 3 dargestellt.

Die Drehmomentbegrenzungseinheit 10a weist eine Hauptrotationsachse 162a auf. Die Drehmomentbegrenzungseinheit 10a überträgt das Drehmoment um die Hauptrotationsachse 162a. Sie überträgt das Drehmoment von der Antriebseinheit 144a in die Abtriebseinheit 152a. Die Hauptrotationsachse 162a der Drehmomentbegrenzungseinheit 10a ist parallel zur Längsachse 150a der Antriebseinheit 144a und senkrecht zur Längsachse 160a der Abtriebseinheit 152a orientiert. Die Drehmomentbegrenzungseinheit 10a ist als eine Sicherheitskupplung ausgebildet. Sie bildet eine Überrastkupplung aus.

Zur Kopplung mit der Antriebswelle 148a der Antriebseinheit 144a umfasst die Drehmomentbegrenzungseinheit 10a ein erstes Kupplungselement 120a. Das erste Kupplungselement 120a ist mit dem Übertragungselement 146a der Antriebseinheit 144a gekoppelt. Das erste Kupplungselement 120a kämmt mit dem Übertragungselement 146a. Das von der Antriebseinheit 144a bereitgestellte Drehmoment wird durch das Übertragungselement 146a auf das erste Kupplungselement 120a übertragen. Das Übertragungselement 146a der Antriebseinheit 144a treibt das erste Kupplungselement 120a an. Das erste Kupplungselement 120a weist eine Rotationsachse auf, die der Hauptrotationsachse 162a entspricht. Das erste Kupplungselement 120a weist einen inneren Umfang 164a, einen mittleren Umfang 166a und einen äußeren Umfang 168a auf. Der innere Umfang 164a, der mittlere Umfang 166a und der äußere Umfang 168a sind jeweils durch unterschiedliche Durchmesser definiert. Der Durchmesser der den inneren Umfang 164a definiert ist dabei am kleinsten und der Durchmesser der den äußeren Umfang 168a definiert ist am größten ausgebildet. Das erste Kupplungselement 120a bildet eine erste Kupplungsstufe der Drehmomentbegrenzungseinheit 10a. Das erste Kupplungselement 120a ist als ein Kupplungsstirnrad ausgebildet.

Das erste Kupplungselement 120a weist eine radial wirkende Eingriffskontur 122a und eine axial wirkende Eingriffskontur 124a auf. Die radial wirkende Eingriffskontur 122a verläuft entlang des mittleren Umfangs 166a des ersten Kupplungselements 120a. Die radial wirkende Eingriffskontur verläuft auf einer der Hauptrotationsachse 162a zugewandten Seite des Kupplungselements 120a.

Die radial wirkende Eingriffkontur 122a weist acht radiale Rastausnehmungen 126a, 128a, 130a, 132a, 134a, 136a, 138a, 140a auf. Die Rastausnehmungen 126a, 128a, 130a, 132a, 134a, 136a, 138a, 140a verlaufen radial. Die Rastausnehmungen 126a, 128a, 130a, 132a, 134a, 136a, 138a, 140a bilden die radial wirkende Eingriffskontur 122a aus. Sie sind symmetrisch um einen Mittelpunkt des Kupplungselements 120a und damit um die Rotationsachse des ersten Kupplungselements 120a verteilt. Sie sind symmetrisch über den mittleren Umfang 166a des ersten Kupplungselements 120a verteilt. Die radialen Rastausnehmungen 126a, 128a, 130a, 132a, 134a, 136a, 138a, 140a sind analog zueinander ausgebildet. Die Rastausnehmungen 126a, 128a, 130a, 132a, 134a, 136a, 138a, 140a sind jeweils als eine Rastnute ausgebildet.

Die axial wirkende Eingriffskontur 124a verläuft zwischen dem inneren Umfang 164a und dem mittleren Umfangs 166a des ersten Kupplungselements 120a. Die axial wirkende Eingriffskontur 124a verläuft auf einer der Abtriebseinheit 152a abgewandten Seite des Kupplungselements 120a.

Die axial wirkende Eingriffskontur 124a weist acht axiale Rastausnehmungen auf, wobei lediglich eine axiale Rastausnehmung 142a in den Figuren 1 bis 4 sichtbar ist. Die axialen Rastausnehmungen 142a bilden die axial wirkende Eingriffskontur 124a aus. Sie sind ebenfalls symmetrisch um den Mittelpunkt und damit um die Rotationsachse des ersten Kupplungselements 120a verteilt. Die axialen Rastausnehmungen 142a sind im Vergleich zu den radialen Rastausnehmungen 126a, 128a, 130a, 132a, 134a, 136a, 138a, 140a näher zu dem Mittelpunkt und damit näher zu der Rotationsachse des ersten Kupplungselements 120a angeordnet. Die axialen Rastausnehmungen 142a sind analog zueinander ausgebildet. Die axialen Rastausnehmungen 142a sind jeweils als eine Rastnute ausgebildet. Sie sind jeweils als eine Bohrung ausgebildet. Grundsätzlich können die radialen Rastausnehmungen 126a, 128a, 130a, 132a, 134a, 136a, 138a, 140a und/oder die axialen Rastausnehmungen 142a asymmetrisch um die Rotationsachse des Kupplungselements 120a verteilt werden. Weiter können alternativ oder zusätzlich die axialen Rastausnehmungen 142a der axial wirkenden Eingriffskontur 124a unterschiedliche radiale Abstände zu dem Mittelpunkt des Kupplungselements 120a aufweisen.

Zur Kopplung mit der Abtriebswelle 158a der Abtriebseinheit 152a umfasst die Drehmomentbegrenzungseinheit 10a ein zweites Kupplungselement 170a. Das zweite Kupplungselement 170a ist mit dem Übertragungselement 156a der Abtriebseinheit 152a verbunden. Das zweite Kupplungselement 170a kämmt mit dem Übertragungselement 156a. Das zweite Kupplungselement 170a überträgt ein Drehmoment auf das Übertragungselement 156a und damit auf die Abtriebswelle 158a. Das zweite Kupplungselement 170a treibt das Übertragungselement 156a der Abtriebseinheit 152a an. Das zweite Kupplungselement 170a weist eine Rotationsachse auf. Die Rotationsachse des zweiten Kupplungselements 170a entspricht der Hauptrotationsachse 162a der Drehmomentbegrenzungseinheit 10a. Das erste Kupplungselement 120a ist drehbar auf dem zweiten Kupplungselement 170a gelagert. Das zweite Kupplungselement 170a ist als ein Kegelritzel ausgebildet.

Zur Kopplung des ersten Kupplungselements 120a mit dem zweiten Kupplungselement 170a umfasst die Drehmomentbegrenzungseinheit 10a ein drittes Kupplungselement 172a. Das dritte Kupplungselement 172a ist zur Übertragung des Drehmoments von dem ersten Kupplungselement 120a auf das zweite Kupplungselement 170a vorgesehen. Das dritte Kupplungselement 172a weist eine Rotationsachse auf, die der Hauptrotationsachse 162a entspricht. Das dritte Kupplungselement 172a und das zweite Kupplungselement 170a bilden eine zweite Kupplungsstufe der Drehmomentbegrenzungseinheit 10a.

Das dritte Kupplungselement 172a ist drehfest mit dem zweiten Kupplungselement 170a verbunden. Das dritte Kupplungselement 172a ist verdrehsicher auf dem zweiten Kupplungselement 170a angeordnet. Es ist auf dem zweiten Kupplungselement 170a aufgepresst. Das dritte Kupplungselement 172a und das erste Kupplungselement 120a sind koaxial zueinander angeordnet. Ein äußerer Umfang 174a des dritten Kupplungselements 172a ist kleiner als der äußere Umfang 168a des ersten Kupplungselements 120a. Das dritte Kupplungselement 172a ist als eine Kupplungsscheibe ausgebildet. Das erste Kupplungselement 120a, das zweite Kupplungselement 170a und das dritte Kupplungselement 172a sind zur Übertragung des Drehmoments von der Antriebseinheit 144a auf die Abtriebseinheit 152a vorgesehen.

Zur Aufnahme und zur Führung von Kraftübertragungsmittel 14a, 16a, 18a, 20a, 22a, 24a, 26a, 28a, 30a, 32a, 34a, 36a, 38a, 40a, 42a, 44a weist das dritte Kupplungselement 172a acht radiale Führungskanäle 176a, 178a, 180a, 182a, 184a, 186a, 188a, 190a und acht axiale Führungskanäle 192a, 194a, 196a, 198a, 200a, 202a, 204a, 206a auf. Die acht radialen Führungskanäle 176a, 178a, 180a, 182a, 184a, 186a, 188a, 190a sind symmetrisch um einen Mittelpunkt und damit um die Rotationsachse des dritten Kupplungselements 172a verteilt. Sie sind versetzt zueinander angeordnet. Die acht axialen Führungskanäle 192a, 194a, 196a, 198a, 200a, 202a, 204a, 206a sind ebenfalls symmetrisch um den Mittelpunkt und damit um die Rotationsachse des dritten Kupplungselements 172a verteilt. Sie sind versetzt zueinander angeordnet. Die Führungskanäle 176a, 178a, 180a, 182a, 184a, 186a, 188a, 190a, 192a, 194a, 196a, 198a, 200a, 202a, 204a, 206a sind versetzt zueinander angeordnet. Grundsätzlich können die radialen Führungskanäle 176a, 178a, 180a, 182a, 184a, 186a, 188a, 190a und/oder die axialen Führungskanäle 192a, 194a, 196a, 198a, 200a, 202a, 204a, 206a asymmetrisch um die Rotationsachse des dritten Kupplungselements 172a verteilt werden. Weiter können alternativ oder zusätzlich die axialen Führungskanäle 192a, 194a, 196a, 198a, 200a, 202a, 204a, 206a unterschiedliche radiale Abstände zu dem Mittelpunkt des Kupplungselements 172a aufweisen.

Die radialen Führungskanäle 176a, 178a, 180a, 182a, 184a, 186a, 188a, 190a sind analog zueinander ausgebildet, wodurch eine Beschreibung auf den radialen Führungskanal 176a beschränkt wird. Der Führungskanal 176a verläuft quer zu der Rotationsachse des dritten Kupplungselements 172a. Er verläuft ausgehend von dem äußeren Umfang 174a in Richtung des Mittelpunkts und damit in Richtung der Rotationsachse des dritten Kupplungselements 172a. Der radiale Führungskanal 176a ist als eine radiale Ausnehmung in dem dritten Kupplungselement 172a ausgebildet. Er ist als eine radiale Bohrung ausgebildet.

Die axialen Führungskanäle 192a, 194a, 196a, 198a, 200a, 202a, 204a, 206a sind ebenfalls analog zueinander ausgebildet, wodurch eine Beschreibung auf den axialen Führungskanal 198a beschränkt wird. Der Führungskanal 198a verläuft parallel zu der Rotationsachse des dritten Kupplungselements 172a. Er verläuft ausgehend von einer, dem ersten Kupplungselement 120a zugewandten Fläche 208a parallel zu der Rotationsachse des Kupplungselements 172a. Der axiale Führungskanal 198a ist als eine axiale Ausnehmung in dem dritten Kupplungselement 172a ausgebildet. Er ist als eine axiale Bohrung ausgebildet.

Zur formschlüssigen Verbindung des ersten Kupplungselements 120a mit dem dritten Kupplungselement 172a und damit mit dem zweiten Kupplungselement 170a weist die Drehmomentbegrenzungseinheit 10a die sechzehn Kraftübertragungsmittel 14a, 16a, 18a, 20a, 22a, 24a, 26a, 28a, 30a, 32a, 34a, 36a, 38a, 40a, 42a, 44a auf. Die Kraftübertragungsmittel 14a, 16a, 18a, 20a, 22a, 24a, 26a, 28a, 30a, 32a, 34a, 36a, 38a, 40a, 42a, 44a übertragen das Drehmoment von dem ersten Kupplungselement 120a auf das dritte Kupplungselement 172a und damit auf das zweite Kupplungselement 170a. Die sechzehn Kraftübertragungsmittel 14a, 16a, 18a, 20a, 22a, 24a, 26a, 28a, 30a, 32a, 34a, 36a, 38a, 40a, 42a, 44a sind zur Begrenzung des übertragenden Drehmoments der Drehmomentbegrenzungseinheit 10a vorgesehen.

Die Drehmomentbegrenzungseinheit 10a weist eine erste Kraftübertragungsgruppe und eine zweite Kraftübertragungsgruppe auf. Die erste Kraftübertragungsgruppe umfasst acht gleichartige Kraftübertragungsmittel 14a, 16a, 18a, 20a, 22a, 24a, 26a, 28a. Die zweite Kraftübertragungsgruppe umfasst acht gleichartige Kraftübertragungsmittel 30a, 32a, 34a, 36a, 38a, 40a, 42a, 44a. Die acht gleichartigen Kraftübertragungsmittel 14a, 16a, 18a, 20a, 22a, 24a, 26a, 28a der ersten Kraftübertragungsgruppe sind symmetrisch um die Hauptrotationsachse 162a verteilt. Sie sind radial versetzt zueinander in dem dritten Kupplungselement 172a angeordnet. Die acht gleichartigen Kraftübertragungsmittel 30a, 32a, 34a, 36a, 38a, 40a, 42a, 44a der zweiten Kraftübertragungsgruppe sind ebenfalls symmetrisch um die Hauptrotationsachse 162a verteilt. Sie sind radial versetzt zueinander in dem dritten Kupplungselement 172a angeordnet. Die gleichartigen Kraftübertragungsmittel 30a, 32a, 34a, 36a, 38a, 40a, 42a, 44a der zweiten Kraftübertragungsgruppe weisen einen gleichen radialen Abstand zu der Hauptrotationsachse 162a auf. Alle Kraftübertragungsmittel 14a, 16a, 18a, 20a, 22a, 24a, 26a, 28a, 30a, 32a, 34a, 36a, 38a, 40a, 42a, 44a sind symmetrisch um die Hauptrotationsachse 162a verteilt und versetzt zueinander in dem dritten Kupplungselement 172a angeordnet. Die erste Kraftübertragungsgruppe und die zweite Kraftübertragungsgruppe bilden jeweils eine Formschlusskupplung aus, wodurch die Drehmomentbegrenzungseinheit 10a als eine reine Formschlusskupplung ausgebildet ist.

Grundsätzlich können die Kraftübertragungsmittel 14a, 16a, 18a, 20a, 22a, 24a, 26a, 28a der ersten Kraftübertragungsgruppe und/oder die Kraftübertragungsmittel 30a, 32a, 34a, 36a, 38a, 40a, 42a, 44a der zweiten Kraftübertragungsgruppe asymmetrisch um die Hauptrotationsachse 162a verteilt werden. Weiter können alternativ oder zusätzlich die Kraftspeicherelemente 30a, 32a, 34a, 36a, 38a, 40a, 42a, 44a der zweiten Kraftübertragungsgruppe unterschiedliche radiale Abstände zu der Hauptrotationsachse 162a aufweisen.

Zur Begrenzung des übertragenden Drehmoments weisen die Kraftübertragungsmittel 14a, 16a, 18a, 20a, 22a, 24a, 26a, 28a, 30a, 32a, 34a, 36a, 38a, 40a, 42a, 44a jeweils ein Rastelement 52a, 54a, 56a, 58a, 60a, 62a, 64a, 66a, 68a, 70a, 72a, 74a, 76a, 78a, 80a, 82a und jeweils ein Kraftspeicherelement 84a, 86a, 88a, 90a, 92a, 94a, 96a, 98a, 106a auf. Zur Übertragung des Drehmoments greifen dabei die Rastelemente 52a, 54a, 56a, 58a, 60a, 62a, 64a, 66a im Wesentlichen formschlüssig jeweils in eine radiale Rastausnehmung 126a, 128a, 130a, 132a, 134a, 136a, 138a, 140a der radial wirkenden Eingriffskontur 122a und die Rastelemente 68a, 70a, 72a, 74a, 76a, 78a, 80a, 82a im Wesentlichen formschlüssig jeweils in eine axiale Rastausnehmung 142a der axial wirkenden Eingriffskontur 124a ein. Die Kraftübertragungsmittel 14a, 16a, 18a, 20a, 22a, 24a, 26a, 28a, 30a, 32a, 34a, 36a, 38a, 40a, 42a, 44a sind jeweils als ein Druckstück ausgebildet.

Die acht gleichartigen Kraftübertragungsmittel 14a, 16a, 18a, 20a, 22a, 24a, 26a, 28a weisen im Vergleich zu den acht gleichartigen Kraftübertragungsmittel 30a, 32a, 34a, 36a, 38a, 40a, 42a, 44a unterschiedliche Übertragungscharakteristiken auf. Somit weist die erste Kraftübertragungsgruppe im Vergleich zu der zweiten Kraftübertragungsgruppe unterschiedliche Übertragungscharakteristiken auf. Zur Ausbildung der unterschiedlichen Übertragungscharakteristiken weisen die acht gleichartigen Kraftübertragungsmittel 14a, 16a, 18a, 20a, 22a, 24a, 26a, 28a der ersten Kraftübertragungsgruppe im Vergleich zu den acht gleichartigen Kraftübertragungsmitteln 30a, 32a, 34a, 36a, 38a, 40a, 42a, 44a der zweiten Kraftübertragungsgruppe eine unterschiedliche Wirkrichtung 48a, 50a auf.

Zur Ausbildung der unterschiedlichen Wirkrichtungen 48a, 50a sind die gleichartigen Kraftübertragungsmittel 14a, 16a, 18a, 20a, 22a, 24a, 26a, 28a der ersten Kraftübertragungsgruppe in den radialen Führungskanälen 176a, 178a, 180a, 182a, 184a, 186a, 188a, 190a und die gleichartigen Kraftübertragungsmittel 30a, 32a, 34a, 36a, 38a, 40a, 42a, 44a der zweiten Kraftübertragungsgruppe in den axialen Führungskanälen 192a, 194a, 196a, 198a, 200a, 202a, 204a, 206a angeordnet. Die Wirkrichtung 48a der Kraftübertragungsmittel 14a, 16a, 18a, 20a, 22a, 24a, 26a, 28a der ersten Kraftübertragungsgruppe verläuft senkrecht zu der Hautrotationsachse 162a und verläuft damit radial. Die acht Kraftübertragungsmittel 14a, 16a, 18a, 20a, 22a, 24a, 26a, 28a der ersten Kraftübertragungsgruppe weisen somit eine radiale Wirkrichtung 48a auf. Die Wirkrichtung 50a der Kraftübertragungsmittel 30a, 32a, 34a, 36a, 38a, 40a, 42a, 44a der zweiten Kraftübertragungsgruppe verläuft entlang der Hauptrotationsachse 162a und verläuft damit axial. Die acht Kraftübertragungsmittel 30a, 32a, 34a, 36a, 38a, 40a, 42a, 44a der zweiten Kraftübertragungsgruppe weisen somit eine axiale Wirkrichtung 50a auf. Die axiale Wirkrichtung 50a ist parallel zu der Hauptrotationsachse 162a orientiert.

Die acht Kraftübertragungsmittel 14a, 16a, 18a, 20a, 22a, 24a, 26a, 28a der ersten Kraftübertragungsgruppe sind gleichartig ausgebildet, d.h. die acht Kraftübertragungsmittel 14a, 16a, 18a, 20a, 22a, 24a, 26a, 28a weisen eine gleiche Übertragungscharakteristik auf. Die acht Kraftübertragungsmittel 14a, 16a, 18a, 20a, 22a, 24a, 26a, 28a der ersten Kraftübertragungsgruppe sind analog zueinander ausgebildet, wodurch eine Beschreibung auf das Kraftübertragungsmittel 14a der ersten Kraftübertragungsgruppe beschränkt wird. Das Kraftübertragungsmittel 14a ist in dem radialen Führungskanal 176a angeordnet. Das Kraftübertragungsmittel 14a weist das Rastelement 52a und das Kraftspeicherelement 84a mit einer Federkonstante auf.

Das Kraftspeicherelement 84a drückt das Rastelement 52a in die radiale Rastausnehmung 126a der radial wirkenden Eingriffskontur 122a. Das in die radiale Rastausnehmung 126a eingreifende Rastelement 52a stellt eine im Wesentlichen formschlüssige Verbindung zwischen dem ersten Kupplungselement 120a und dem dritten Kupplungselement 172a her. Das Kraftspeicherelement 84a ist als eine zylindrische Schraubendruckfeder ausgebildet.

Die acht Kraftübertragungsmittel 30a, 32a, 34a, 36a, 38a, 40a, 42a, 44a der zweiten Kraftübertragungsgruppe sind gleichartig ausgebildet, d.h. die acht Kraftübertragungsmittel 30a, 32a, 34a, 36a, 38a, 40a, 42a, 44a weisen eine gleiche Übertragungscharakteristik auf. Die acht Kraftübertragungsmittel 30a, 32a, 34a, 36a, 38a, 40a, 42a, 44a der zweiten Kraftübertragungsgruppe sind analog zueinander ausgebildet, wodurch eine Beschreibung auf das Kraftübertragungsmittel 36a der zweiten Kraftübertragungsgruppe beschränkt wird. Das Kraftübertragungsmittel 36a ist in dem axialen Führungskanal 198a angeordnet. Das Kraftübertragungsmittel 36a weist das Rastelement 74a und das Kraftspeicherelement 106a mit einer Federkonstante auf. In den Figuren 1 bis 4 ist lediglich das Kraftspeicherelement 106a des Kraftübertragungsmittels 36a sichtbar.

Das Kraftspeicherelement 106a drückt das Rastelement 74a in die axiale Rastausnehmung 142a der axial wirkenden Eingriffskontur 124a. Das in die axiale Rastausnehmung 142a eingreifende Rastelement 74a stellt eine im Wesentlichen formschlüssige Verbindung zwischen dem ersten Kupplungselement 120a und dem dritten Kupplungselement 172a her. Das Kraftspeicherelement 106a ist ebenfalls als eine zylindrische Schraubendruckfeder ausgebildet.

Zur zusätzlichen Ausbildung der unterschiedlichen Übertragungscharakteristik des Kraftübertragungsmittels 14a der ersten Kraftübertragungsgruppe im Vergleich zu dem Kraftübertragungsmittel 36a der zweiten Kraftübertragungsgruppe sind die Rastelemente 52a, 74a und die Kraftspeicherelemente 84a, 106a der Kraftübertragungsmittel 14a, 36a unterschiedlich ausgebildet. Das Rastelement 52a des Kraftübertragungsmittels 14a der ersten Kraftübertragungsgruppe und das Rastelement 74a des Kraftübertragungsmittels 36a der zweiten Kraftübertragungsgruppe weisen zur Ausbildung der unterschiedlichen Übertragungscharakteristiken unterschiedliche Formen auf.

Das Rastelement 52a des Kraftübertragungsmittels 14a der ersten Kraftübertragungsgruppe weist eine zylindrische Form auf. Es ist als ein Zylinder ausgebildet. Das Rastelement 52a weist dadurch eine zylindrische Auflagefläche auf. Das Rastelement 52a liegt mit der zylindrischen Auflagefläche in der radialen Rastausnehmung 126a der radial wirkenden Eingriffskontur 122a. Das Rastelement 74a des Kraftübertragungsmittels 36a der zweiten Kraftübertragungsgruppe weist eine Kugelform auf. Es ist als eine Kugel ausgebildet. Das Rastelement 74a weist dadurch eine kugelförmige Auflagefläche auf. Das Rastelement 74a liegt mit der kugelförmigen Auflagefläche in der axialen Rastausnehmung 142a der axial wirkenden Eingriffskontur 124a.

Das Kraftspeicherelement 84a des Kraftübertragungsmittels 14a der ersten Kraftübertragungsgruppe und das Kraftspeicherelement 106a des Kraftübertragungsmittels 36a der zweiten Kraftübertragungsgruppe weisen zur zusätzlichen Ausbildung der unterschiedlichen Übertragungscharakteristiken unterschiedliche Federkonstanten auf.

Die Übertragungscharakteristik der acht gleichartigen Kraftübertragungsmittel 14a, 16a, 18a, 20a, 22a, 24a, 26a, 28a der ersten Kraftübertragungsgruppe unterscheidet sich von der Übertragungscharakteristik der acht gleichartigen Kraftübertragungsmittel 30a, 32a, 34a, 36a, 38a, 40a, 42a, 44a der zweiten Kraftübertragungsgruppe durch die radiale Wirkrichtung 48a der ersten Kraftübertragungsgruppe und die axiale Wirkrichtung 50a der zweiten Kraftübertragungsgruppe, durch die Form der Rastelemente 52a, 54a, 56a, 58a, 60a, 62a, 64a, 66a der ersten Kraftübertragungsgruppe und der Rastelemente 68a, 70a, 72a, 74a, 76a, 78a, 80a, 82a der zweiten Kraftübertragungsgruppe und durch die Federkonstanten der Kraftspeicherelemente 84a, 86a, 88a, 90a, 92a, 94a, 96a, 98a der ersten Kraftübertragungsgruppe und der Federkonstanten der Kraftspeicherelemente 106a der zweiten Kraftübertragungsgruppe.

In einem Betriebszustand, in dem das Einsatzwerkzeug 154a der Werkzeugmaschine blockiert, wird die Abtriebseinheit 152a und damit die Abtriebswelle 158a, das Übertragungselement 156a und das zweite Kupplungselement 170a abrupt abgebremst, während die Antriebseinheit 144a unvermindert ein Drehmoment bereitstellt. Wird nun ein bestimmtes Überrastmoment in der Drehmomentbegrenzungseinheit 10a überschritten, geben die Kraftspeicherelemente 84a, 86a, 88a, 90a, 92a, 94a, 96a, 98a der Kraftübertragungsmittel 14a, 16a, 18a, 20a, 22a, 24a, 26a, 28a der ersten Kraftübertragungsgruppe und die Kraftspeicherelemente 106a der Kraftübertragungsmittel 30a, 32a, 34a, 36a, 38a, 40a, 42a, 44a der zweiten Kraftübertragungsgruppe zeitlich versetzt nach, wodurch die Rastelemente 52a, 54a, 56a, 58a, 60a, 62a, 64a, 66a der Kraftübertragungsmittel 14a, 16a, 18a, 20a, 22a, 24a, 26a, 28a der ersten Kraftübertragungsgruppe und die Rastelemente 68a, 70a, 72a, 74a, 76a, 78a, 80a, 82a der Kraftübertragungsmittel 30a, 32a, 34a, 36a, 38a, 40a, 42a, 44a der zweiten Kraftübertragungsgruppe zeitlich versetzt entgegen einer Federkraft des entsprechenden Kraftspeicherelements 84a, 86a, 88a, 90a, 92a, 94a, 96a, 98a, 106a in den jeweiligen Führungskanal 176a, 178a, 180a, 182a, 184a, 186a, 188a, 190a, 192a, 194a, 196a, 198a, 200a, 202a, 204a, 206a und damit aus der jeweiligen Rastausnehmung 126a, 128a, 130a, 132a, 134a, 136a, 138a, 140a, 142a gedrückt werden. Dadurch löst sich zeitlich versetzt die von den Kraftübertragungsmitteln 14a, 16a, 18a, 20a, 22a, 24a, 26a, 28a, 30a, 32a, 34a, 36a, 38a, 40a, 42a, 44a hergestellte formschlüssige Verbindung zwischen dem ersten Kupplungselement 120a und dem dritten Kupplungselement 172a, wodurch das übertragende Drehmoment der Drehmomentbegrenzungseinheit 10a begrenzt wird. Grundsätzlich können die Kraftübertragungsmittel 14a, 16a, 18a, 20a, 22a, 24a, 26a, 28a, 30a, 32a, 34a, 36a, 38a, 40a, 42a, 44a auch so ausgebildet werden, dass die formschlüssige Verbindung zeitgleich zwischen dem ersten Kupplungselement 120a und dem dritten Kupplungselement 172a gelöst wird.

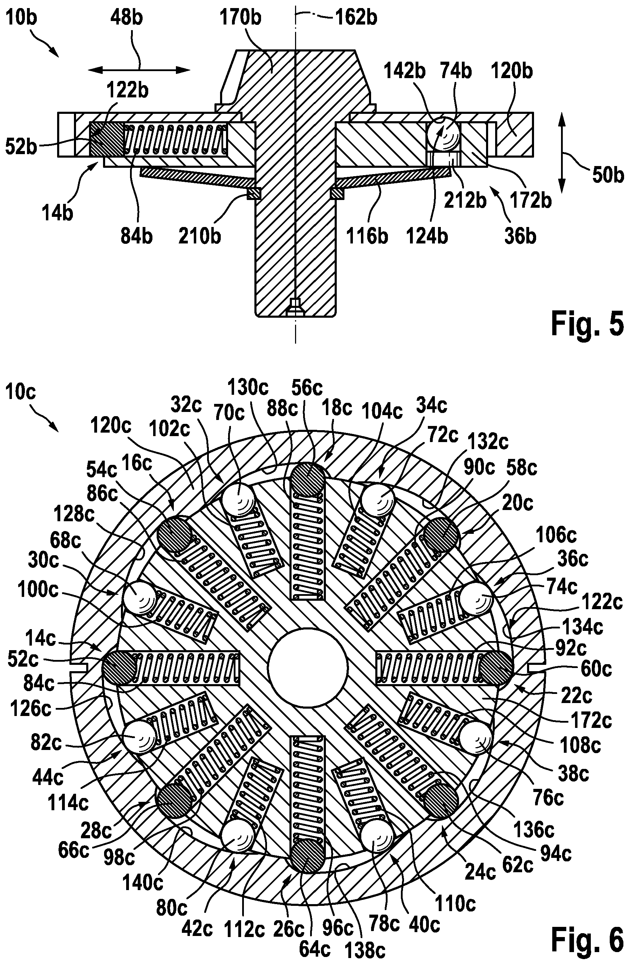

In Figuren 5 bis 8 sind drei alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis d hinzugefügt. Die nachfolgende Beschreibung beschränkt sich im Wesentlichen auf die Unterschiede zu dem ersten Ausführungsbeispiel in den Figuren 1 bis 4, wobei bezüglich gleichbleibender Bauteile, Merkmale und Funktionen auf die Beschreibung des ersten Ausführungsbeispiels in den Figuren 1 bis 4 verwiesen werden kann.

Figur 5 zeigt einen Längsschnitt einer alternativen Drehmomentbegrenzungseinheit 10b einer Werkzeugmaschinenvorrichtung zur Begrenzung und Übertragung eines Drehmoments um eine Hauptrotationsachse 162b in einem Antriebsstrang einer als Bohrhammer ausgebildeten Werkzeugmaschine. Die Werkzeugmaschine weist hierbei einen zu der in Figur 1 gezeigten Werkzeugmaschine und die Werkzeugmaschinenvorrichtung einen zu der in der Figur 2 gezeigten Werkzeugmaschinenvorrichtung analogen Aufbau auf.

Zur formschlüssigen Verbindung eines ersten Kupplungselements 120b mit einem dritten Kupplungselement 172b und damit mit einem zweiten Kupplungselement weist die Drehmomentbegrenzungseinheit 10b sechzehn Kraftübertragungsmittel auf, wobei in der Figur 5 lediglich die Kraftübertragungsmittel 14b, 36b sichtbar sind. Die Kraftübertragungsmittel 14b, 36b übertragen das Drehmoment von dem ersten Kupplungselement 120b auf das dritte Kupplungselement 172b und damit auf das zweite Kupplungselement 170b. Die Kraftübertragungsmittel 14b, 36b sind zur Begrenzung des übertragenden Drehmoments der Drehmomentbegrenzungseinheit 10b vorgesehen. Dazu sind die Kraftübertragungsmittel 14b, 36b jeweils als ein Druckstück ausgebildet.

Die Drehmomentbegrenzungseinheit 10b weist eine erste Kraftübertragungsgruppe auf, die acht gleichartige Kraftübertragungsmittel, die analog zu dem Kraftübertragungsmittel 14b ausgebildet sind, umfasst. Die Drehmomentbegrenzungseinheit 10b weist eine zweite Kraftübertragungsgruppe auf, die acht gleichartige Kraftübertragungsmittel, die analog zu dem Kraftübertragungsmittel 36b ausgebildet sind, umfasst. Das Kraftübertragungsmittel 14b und das Kraftübertragungsmittel 36b weisen unterschiedliche Übertragungscharakteristiken auf. Die Übertragungscharakteristik des Kraftübertragungsmittels 14b unterscheidet sich von der Übertragungscharakteristik des Kraftübertragungsmittels 36b durch die unterschiedlichen Wirkrichtungen 48b, 50b, durch eine unterschiedliche Form von Rastelementen 52b, 74b und durch eine unterschiedliche Federkonstante von Kraftspeicherelementen 84b, 116b.

Im Unterschied zu dem vorhergehenden Ausführungsbeispiel weisen die Kraftübertragungsmittel 36b der zweiten Kraftübertragungsgruppe das einzelne Kraftspeicherelement 116b auf. Das Kraftspeicherelement 116b ist als ein zentrales, gemeinsames Kraftspeicherelement der Kraftübertragungsmittel 36b der zweiten Kraftübertragungsgruppe ausgebildet. Das zentrale Kraftspeicherelement 116b betätigt gemeinsam die Rastelemente 74b der Kraftübertragungsmittel 36b der zweiten Kraftübertragungsgruppe und drückt die acht Rastelemente 74b in entsprechende axiale Rastausnehmungen 142b einer axial wirkenden Eingriffskontur 124b in dem ersten Kupplungselement 120b. Das zentrale Kraftspeicherelement 116b stützt sich an einem Stützelement 210b ab, das fest mit dem zweiten Kupplungselement 170b verbunden ist. Das zentrale Kraftspeicherelement 116b ist als eine Tellerfeder ausgebildet.

In diesem Ausführungsbeispiel wirkt das zentrale Kraftspeicherelement 116b indirekt auf die Rastelemente 74b der Kraftübertragungsmittel 36b der zweiten Kraftübertragungsgruppe ein. Dazu weist jedes Kraftübertragungsmittel 36b der zweiten Kraftübertragungsgruppe ein Zwischenelement 212b auf, wobei lediglich das Zwischenstück 212b des Kraftübertragungsmittels 36b sichtbar ist. Das Kraftspeicherelement 116b wirkt auf das entsprechende Rastelement 74b über das entsprechende Zwischenstück 212b ein. Das Zwischenstück 212b ist jeweils zwischen dem Rastelement 74b und dem Kraftspeicherelement 116b angeordnet. Die Zwischenstücke 212b der Kraftübertragungsmittel 36b der zweiten Kraftübertragungsgruppe sind jeweils als Distanzsteine ausgebildet. Grundsätzlich kann das zentrale Kraftspeicherelement 116b auch direkt auf die Rastelemente 74b der zweiten Kraftübertragungsgruppe einwirken, wodurch auf Zwischenstücke 212b verzichtet werden kann.

22c, 24c, 26c, 28c, 30c, 32c, 34c, 36c, 38c, 40c, 42c, 44c sind zur Begrenzung des übertragenden Drehmoments der Drehmomentbegrenzungseinheit 10c vorgesehen. Dazu sind die Kraftübertragungsmittel 14c, 16c, 18c, 20c, 22c, 24c, 26c, 28c, 30c, 32c, 34c, 36c, 38c, 40c, 42c, 44c jeweils als ein Druckstück ausgebildet.

Im Unterschied zu den vorherigen Ausführungsbeispielen weist das erste Kupplungselement 120c lediglich radiale Rastausnehmungen 126c, 128c, 130c, 132c, 134c, 136c, 138c, 140c und damit lediglich eine radial wirkende Eingriffskontur 122c auf. Weiter weist das dritte Kupplungselement 172c im Unterschied zu den vorherigen Ausführungsbeispielen lediglich radiale Führungskanäle auf, wobei die Führungskanäle radial versetzt zueinander angeordnet sind.

Die Drehmomentbegrenzungseinheit 10c weist eine erste Kraftübertragungsgruppe auf, die acht gleichartige Kraftübertragungsmittel 14c, 16c, 18c, 20c, 22c, 24c, 26c, 28c umfasst. Die Drehmomentbegrenzungseinheit 10c weist eine zweite Kraftübertragungsgruppe auf, die acht gleichartige Kraftübertragungsmittel 30c, 32c, 34c, 36c, 38c, 40c, 42c, 44c umfasst. Die Kraftübertragungsmittel 14c, 16c, 18c, 20c, 22c, 24c, 26c, 28c der ersten Kraftübertragungsgruppe und die Kraftübertragungsmittel 30c, 32c, 34c, 36c, 38c, 40c, 42c, 44c der zweiten Kraftübertragungsgruppe weisen unterschiedliche Übertragungscharakteristiken auf.

Die Kraftübertragungsmittel 14c, 16c, 18c, 20c, 22c, 24c, 26c, 28c, 30c, 32c, 34c, 36c, 38c, 40c, 42c, 44c weisen jeweils ein Rastelement 52c, 54c, 56c, 58c, 60c, 62c, 64c, 66c, 68c, 70c, 72c, 74c, 76c, 78c, 80c, 82c und jeweils ein Kraftspeicherelement 84c, 86c, 88c, 90c, 92c, 94c, 96c, 98c, 100c, 102c, 104c, 106c, 108c, 110c, 112c, 114c auf. In diesem Ausführungsbeispiel greift jeweils ein Rastelement 52c, 54c, 56c, 58c, 60c, 62c, 64c, 66c der Kraftübertragungsmittel 14c, 16c, 18c, 20c, 22c, 24c, 26c, 28c der ersten Kraftübertragungsgruppe und jeweils ein Rastelement 68c, 70c, 72c, 74c, 76c, 78c, 80c, 82c der Kraftübertragungsmittel 30c, 32c, 34c, 36c, 38c, 40c, 42c, 44c der zweiten Kraftübertragungsgruppe in ein und dieselbe Rastausnehmung 126c, 128c, 130c, 132c, 134c, 136c, 138c, 140c im Wesentlichen formschlüssig ein.

Die acht Kraftübertragungsmittel 14c, 16c, 18c, 20c, 22c, 24c, 26c, 28c der ersten Kraftübertragungsgruppe sind gleichartig ausgebildet, d.h. die acht Kraftübertragungsmittel 14c, 16c, 18c, 20c, 22c, 24c, 26c, 28c weisen eine gleiche Übertragungscharakteristik auf. Die acht Kraftübertragungsmittel 14c, 16c, 18c, 20c, 22c, 24c, 26c, 28c sind jeweils in einem radialen Führungskanal des dritten Kupplungselements 172c angeordnet und weisen somit eine radiale Wirkrichtung auf. Die acht Kraftübertragungsmittel 14c, 16c, 18c, 20c, 22c, 24c, 26c, 28c der ersten Kraftübertragungsgruppe sind analog zueinander ausgebildet, wodurch eine Beschreibung auf das Kraftübertragungsmittel 14c der ersten Kraftübertragungsgruppe beschränkt wird. Das Kraftübertragungsmittel 14c greift in die radiale Rastausnehmung 126c der radial wirkenden Eingriffskontur 122c des ersten Kupplungselements 120c ein. Das Kraftübertragungsmittel 14c weist das Rastelement 52c und das Kraftspeicherelement 84c mit einer Federkonstante auf.

Die acht Kraftübertragungsmittel 30c, 32c, 34c, 36c, 38c, 40c, 42c, 44c der zweiten Kraftübertragungsgruppe sind gleichartig ausgebildet, d.h. die acht Kraftübertragungsmittel 30c, 32c, 34c, 36c, 38c, 40c, 42c, 44c weisen eine gleiche Übertragungscharakteristik auf. Die acht Kraftübertragungsmittel 30c, 32c, 34c, 36c, 38c, 40c, 42c, 44c sind ebenfalls jeweils in einem radialen Führungskanal des dritten Kupplungselements 172c angeordnet und weisen somit ebenfalls eine radiale Wirkrichtung auf. Die acht Kraftübertragungsmittel 30c, 32c, 34c, 36c, 38c, 40c, 42c, 44c der zweiten Kraftübertragungsgruppe sind analog zueinander ausgebildet, wodurch eine Beschreibung auf das Kraftübertragungsmittel 44c der zweiten Kraftübertragungsgruppe beschränkt wird. Das Kraftübertragungsmittel 44c greift ebenfalls in die radiale Rastausnehmung 126c der radial wirkenden Eingriffskontur 122c des ersten Kupplungselements 120c ein. Das Kraftübertragungsmittel 14c weist das Rastelement 82c und das Kraftspeicherelement 114c mit einer Federkonstante auf, wobei sich die Federkonstante des Kraftspeicherelements 114c von der Federkonstanten des Kraftspeicherelements 84c unterscheiden.

Das Kraftübertragungsmittel 14c der ersten Kraftübertragungsgruppe und das Kraftübertragungsmittel 44c der zweiten Kraftübertragungsgruppe greifen zueinander radial versetzt in ein und dieselbe radiale Rastausnehmung 126c ein, wodurch sich die Übertragungscharakteristik der Kraftübertragungsmittel 14c, 44c voneinander unterscheiden. Jeweils ein Kraftübertragungsmittel 14c, 16c, 18c, 20c, 22c, 24c, 26c, 28c der ersten Kraftübertragungsgruppe und ein Kraftübertragungsmittel 30c, 32c, 34c, 36c, 38c, 40c, 42c, 44c der zweiten Kraftübertragungsgruppe greifen zueinander radial versetzt in ein und dieselbe radiale Rastausnehmung 126c, 128c, 130c, 132c, 134c, 136c, 138c, 140c ein.

Somit weisen alle sechzehn Kraftübertragungsmittel 14c, 16c, 18c, 20c, 22c, 24c, 26c, 28c, 30c, 32c, 34c, 36c, 38c, 40c, 42c, 44c eine gleiche Wirkrichtung auf. Die Kraftübertragungsmittel 14c, 16c, 18c, 20c, 22c, 24c, 26c, 28c der ersten Kraftübertragungsgruppe und die Kraftübertragungsmittel 30c, 32c, 34c, 36c, 38c, 40c, 42c, 44c der zweiten Kraftübertragungsgruppe weisen eine radiale Wirkrichtung auf.

In diesem Ausführungsbeispiel unterscheidet sich die Übertragungscharakteristik der Kraftübertragungsmittel 14c, 16c, 18c, 20c, 22c, 24c, 26c, 28c der ersten Kraftübertragungsgruppe von der Übertragungscharakteristik der Kraftübertragungsmittel 30c, 32c, 34c, 36c, 38c, 40c, 42c, 44c durch die Form der Rastelemente 52c, 54c, 56c, 58c, 60c, 62c, 64c, 66c der ersten Kraftübertragungsgruppe und der Rastelemente 68c, 70c, 72c, 74c, 76c, 78c, 80c, 82c der zweiten Kraftübertragungsgruppe, durch die Federkonstanten der Kraftspeicherelemente 84c, 86c, 88c, 90c, 92c, 94c, 96c, 98c der ersten Kraftübertragungsgruppe und der Federkonstanten der Kraftspeicherelemente 100c, 102c, 104c, 106c, 108c, 110c, 112c, 114c der zweiten Kraftübertragungsgruppe und durch den radial versetzten Eingriff in ein und dieselbe Rastausnehmung 126c, 128c, 130c, 132c, 134c, 136c, 138c, 140c von jeweils einem Rastelement 52c, 54c, 56c, 58c, 60c, 62c, 64c, 66c der ersten Kraftübertragungsgruppe und einem Rastelement 68c, 70c, 72c, 74c, 76c, 78c, 80c, 82c der zweien Kraftübertragungsgruppe.

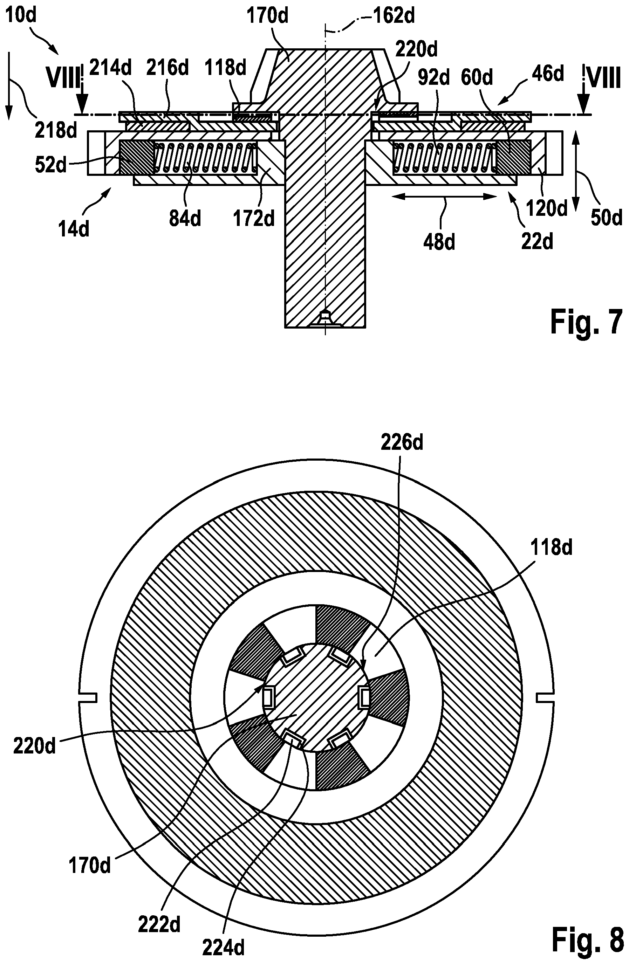

Die Figuren 7 und 8 zeigen ein viertes Ausführungsbeispiel einer Werkzeugmaschinenvorrichtung. In der Figur 7 ist ein Längsschnitt und in der Figur 8 ein Querschnitt einer Drehmomentbegrenzungseinheit 10d der Werkzeugmaschinenvorrichtung zur Begrenzung und Übertragung eines Drehmoments um eine Hauptrotationsachse 162d in einem Antriebsstrang einer als Bohrhammer ausgebildeten Werkzeugmaschine dargestellt. Der Werkzeugmaschine weist hierbei einen zu der in Figur 1 gezeigten Werkzeugmaschine und die Werkzeugmaschinenvorrichtung eine zu der in Figur 2 gezeigten Werkzeugmaschinenvorrichtung analogen Aufbau auf.

Im Unterschied zu den vorherigen Ausführungsbeispielen weist die Drehmomentbegrenzungseinheit 10d zur Begrenzung eines übertragenden Drehmoments der Drehmomentbegrenzungseinheit 10d neun Kraftübertragungsmittel auf, wobei in den Figuren 7 und 8 lediglich drei Kraftübertragungsmittel 14d, 22d, 46d sichtbar sind. Die neun Kraftübertragungsmittel 14d, 22d, 46d übertragen das Drehmoment von einem ersten Kupplungselement 120d auf ein drittes Kupplungselement 172d und damit auf ein zweites Kupplungselement 170d.

Die Drehmomentbegrenzungseinheit 10d weist eine Kraftübertragungsgruppe auf, die acht gleichartige Kraftübertragungsmittel, die analog zu den zwei Kraftübertragungsmittel 14d, 22d ausgebildet sind, umfasst. Weiter umfasst die Drehmomentbegrenzungseinheit 10d das Kraftübertragungsmittel 46d, das sich in einer Übertragungscharakteristik von den Kraftübertragungsmittel 14d, 22d unterscheidet. Grundsätzlich kann die Drehmomentbegrenzungseinheit 10d eine zweite Kraftübertragungsgruppe aufweisen, die mehrere analog zu dem Kraftübertragungsmittel 46d ausgebildete, gleichartige Kraftübertragungsmittel, umfasst.

Zur Ausbildung der unterschiedlichen Übertragungscharakteristiken verbinden die Kraftübertragungsmittel 14d, 22d der Kraftübertragungsgruppe das erste Kupplungselement 120d und das dritte Kupplungselement 172d formschlüssig miteinander und das Kraftübertragungsmittel 46d verbindet das erste Kupplungselement 120d und das zweite Kupplungselement 172d und damit das dritte Kupplungselement 170d reibschlüssig miteinander. Zur weiteren Ausbildung der unterschiedlichen Übertragungscharakteristiken weisen die Kraftübertragungsmittel 14d, 22d der Kraftübertragungsgruppe eine radiale Wirkrichtung 48d und das Kraftübertragungsmittel 46d eine axiale Wirkrichtung 50d auf.

Im Unterschied zu den vorherigen Ausführungsbeispielen bilden somit die Kraftübertragungsmittel 14d, 22d der Kraftübertragungsgruppe eine Formschlusskupplung und das Kraftübertragungsmittel 46d eine Reibschlusskupplung aus. Die Kraftübertragungsmittel 14d, 22d der Kraftübertragungsgruppe weisen jeweils ein Rastelement 52d, 60d und ein Kraftspeicherelement 84d, 92d mit jeweils einer Federkonstante auf, wobei die Rastelemente 52d, 60d und die Kraftspeicherelemente 84d, 92d analog ausgebildet sind. Die Drehmomentbegrenzungseinheit 10d ist damit als eine kombinierte Form- und Reibschlusskupplung ausgebildet.

Das Kraftübertragungsmittel 46d weist ein Reibelement 214d, ein Verbindungselement 216d und ein Kraftspeicherelement 118d auf. Das Reibelement 214d, das Verbindungselement 216d und das Kraftspeicherelement 118d sind koaxial zueinander angeordnet.

Das Reibelement 214d ist zur reibschlüssigen Verbindung des ersten Kupplungselements 120d und des zweiten Kupplungselements 172d vorgesehen. Das Reibelement 214d ist bezüglich einer Richtung 218d, die parallel zu der Hauptrotationsachse 162d orientiert ist, zwischen dem ersten Kupplungselement 120d und dem Verbindungselement 216d angeordnet. Das Reibelement 214d liegt an dem ersten Kupplungselement 120d und an dem Verbindungselement 216d an. Das Reibelement 214d ist fest mit dem ersten Kupplungselement 120d verbunden. Das Reibelement 214d ist als eine Reibscheibe ausgebildet.

Das Verbindungselement 216d ist zur Übertragung des Drehmoments von dem ersten Kupplungselement 120d auf das zweite Kupplungselement 170d vorgesehen. Das Verbindungselement 216d ist formschlüssig mit dem zweiten Kupplungselement 170d und über das Reibelement 214d reibschlüssig mit dem ersten Kupplungselement 120d verbunden. Das Verbindungselement 216d weist an ihrem inneren Umfang 220d eine Verzahnung 222d auf. Die Verzahnung 222d des Verbindungselements 216d ist korrespondierend zu einer Verzahnung 224d an einem äußeren Umfang 226d des zweiten Kupplungselements 170d ausgebildet. Die Verzahnung 222d des Verbindungselements 216d greift in die Verzahnung 224d des zweiten Kupplungselements 170d ein, wodurch das Verbindungselement 216d und das zweite Kupplungselement 170d formschlüssig miteinander verbunden sind. Das Verbindungselement 216d ist in der Richtung 218d, die parallel zu der Hauptrotationsachse 162d orientiert ist, zwischen dem ersten Kupplungselement 120d und dem Kraftspeicherelement 118d angeordnet. Das Verbindungselement 216d ist als eine Mitnehmerscheibe ausgebildet. Die Verzahnung 222d ist als eine Mitnahmeverzahnung ausgebildet.

Das Kraftspeicherelement 118d ist zur Bereitstellung eines notwendigen Andrucks des Verbindungselements 216d auf das Reibelement 214d vorgesehen. Das Kraftspeicherelement 118d drückt das Verbindungselement 216d auf das Reibelement 214d. Das Kraftspeicherelement 118d ist in der Richtung 218d, die parallel zu der Hauptrotationsachse 162d orientiert ist, zwischen dem zweiten Kupplungselement 170d und dem Verbindungselement 216d angeordnet. Es stützt sich an dem zweiten Kupplungselement 170d und dem Verbindungselement 216d ab. Das Kraftspeicherelement 118d weist eine Federkonstante auf, die sich von der Federkonstanten der Kraftspeicherelemente 84d, 92d der Kraftübertragungsmittel 14d, 22d unterscheidet. Das Kraftspeicherelement 118d ist als eine Wellfeder ausgebildet.

Die Übertragungscharakteristik der Kraftübertragungsmittel 14d, 22d der Kraftübertragungsgruppe unterscheidet sich von der Übertragungscharakteristik des Kraftübertragungsmittels 46d durch die radiale Wirkrichtung 48d der Kraftübertragungsgruppe und die axiale Wirkrichtung 50d des Kraftübertragungsmittels 46d und durch die formschlüssige Verbindung der Kupplungselemente 120d, 172d durch die Kraftübertragungsgruppe und die reibschlüssige Verbindung der Kupplungselemente 120d, 170d durch das Kraftübertragungsmittels 46d.

In einem Betriebszustand, in dem ein Einsatzwerkzeug der Werkzeugmaschine blockiert, wird das zweite Kupplungselement 170d abrupt abgebremst, während das erste Kupplungselement 120d unvermindert weiterdreht. Durch das Kraftübertragungsmittel 46d entsteht eine reibungsbehaftete Relativbewegung, wodurch das zweite Kupplungselement 170d permanent von dem ersten Kupplungselement 120d angetrieben wird. Das Kraftübertragungsmittel 46d überträgt somit ein andauerndes Drehmoment mit gleichbleibender Amplitude. Zusätzlich übertragen die Kraftübertragungsmittel 14d, 22d der ersten Kraftübertragungsgruppe ein wechselndes Überrastmoment, das durch ein wechselndes Ein- und Ausrasten der Rastelemente 52d, 60d resultiert. Das andauernde Drehmoment wird damit dem wechselndem Überrastmoment überlagert.

## Patentansprüche

1. Bohr- und/oder Meißelhammer mit einer eine Antriebswelle (148a) aufweisenden Antriebseinheit (144a), einer eine Abtriebswelle (158a) aufweisenden Abtriebseinheit (152a) zur Betätigung eines Einsatzwerkzeugs (154a) und mit zumindest einer Drehmomentbegrenzungseinheit (10a; 10b) mit einem ersten Kupplungselement (120a; 120b), das mit einem Übertragungselement (146a) der Antriebswelle (148a) kämmt, einem zweiten Kupplungselement (170a; 170b), das mit einem Übertragungselement (156a) der Abtriebswelle (158a) kämmt, und einem dritten Kupplungselement (172a; 172b), das zur Kopplung des ersten Kupplungselements (120a; 120b) und des zweiten Kupplungselements (170a; 170b) dient und drehfest mit dem zweiten Kupplungselement (170a; 170b) verbunden ist, wobei die Drehmomentbegrenzungseinheit (10a; 10b) in zumindest einem Betriebszustand dazu vorgesehen ist, in einem Antriebsstrang (12a) des Bohr- und/oder Meißelhammers ein Drehmoment zwischen der Antriebseinheit (144a) und der Abtriebseinheit (152a) zu begrenzen, wobei das dritte Kupplungselement (172a; 172b) zumindest zwei Kraftübertragungsmittel (14a-28a, 30a-44a; 14b, 36b) aufweist, die in zumindest einem Betriebszustand dazu vorgesehen sind, das Drehmoment zu übertragen, und wobei die zumindest zwei Kraftübertragungsmittel (14a-28a, 30a-44a; 14b, 36b) unterschiedliche Übertragungscharakteristiken aufweisen, **dadurch gekennzeichnet, dass** die zumindest zwei Kraftübertragungsmittel (14a-28a, 30a-44a; 14b, 36b) zur Ausbildung der unterschiedlichen Übertragungscharakteristiken unterschiedliche Wirkrichtungen (48a, 50a; 48b, 50b) aufweisen, wobei das dritte Kupplungselement (172a; 172b) zur Aufnahme und zur Führung der zumindest zwei Kraftübertragungsmittel (14a-28a, 30a-44a; 14b, 36b) jeweils zumindest einen radialen Führungskanal (176a-190a) als radiale Ausnehmung und zumindest einen axialen Führungskanal (192a-206a) als axiale Ausnehmung aufweist und die Kraftübertragungsmittel (14a-28a, 30a-44a; 14b, 36b) zur Begrenzung des übertragenen Drehmoments jeweils ein in den Führungskanälen (176a-190a) gelagertes Rastelement (52a-82a; 52b, 74b) und ein Kraftspeicherelement (84a-98a, 106a; 84b, 116b) derart aufweisen, dass das Kraftspeicherelement (84a-98a; 84b) das zumindest eine radial gelagerte Rastelement (52a-66a; 52b) im Wesentlichen formschlüssig jeweils in eine radiale Rastausnehmung (126a-140a) einer radialen Eingriffskontur (122a; 122b) des ersten Kupplungselements (120a; 120b) und das Kraftspeicherelement (106a; 116b) das zumindest eine axial gelagerte Rastelement (68a-82a; 74b) im Wesentlichen formschlüssig jeweils in eine axiale Rastausnehmung (142a; 142b) einer axial wirkenden Eingriffskontur (124a) des ersten Kupplungselements (120a; 120b) drückt.

2. Bohr- und/oder Meißelhammer nach Anspruch 1, **dadurch gekennzeichnet, dass** die Kraftübertragungsmittel (14a-28a, 30a-44a; 14b, 36b) zur Ausbildung der unterschiedlichen Übertragungscharakteristiken wenigstens teilweise unterschiedliche Rastelemente (52a-66a, 68a-82a; 52b,74b) aufweisen, die zur Übertragung des Drehmoments für einen im Wesentlichen formschlüssigen Eingriff vorgesehen sind.

3. Bohr- und/oder Meißelhammer nach Anspruch 2, **dadurch gekennzeichnet, dass** die Rastelemente (52a-66a, 68a-82a; 52b,74b) der zumindest zwei Kraftübertragungsmittel (14a-28a, 30a-44a; 14b, 36b) zumindest teilweise unterschiedliche Formen aufweisen.

4. Bohr- und/oder Meißelhammer nach einem der vorhergehenden Ansprüche, **dadurch gekennzeichnet, dass** die Kraftübertragungsmittel (14a-28a, 30a-44a; 14b, 36b) zur Ausbildung der unterschiedlichen Übertragungscharakteristiken wenigstens teilweise unterschiedliche Kraftspeicherelemente (84a-98a, 106a; 84b, 116b) aufweisen.

5. Bohr- und/oder Meißelhammer nach Anspruch 4, **dadurch gekennzeichnet, dass** die Kraftspeicherelemente (84a-98a, 106a; 84b, 116b) der zumindest zwei Kraftübertragungsmittel (14a-28a, 30a-44a; 14b, 36b) unterschiedliche Federkonstanten aufweisen.

6. Bohr- und/oder Meißelhammer nach einem der vorhergehenden Ansprüche, **dadurch gekennzeichnet, dass** die Drehmomentbegrenzungseinheit (10a; 10b) zumindest ein weiteres Kraftübertragungsmittel (14a-28a, 30a-44a; 14b, 36b) aufweist, das eine gleiche Übertragungscharakteristik aufweist wie eines der zumindest zwei Kraftübertragungsmittel (14a-28a, 30a-44a; 14b, 36b).

## Claims

1. Hammer drill and/or chipping hammer having a drive unit (144a) having a drive shaft (148a), an output unit (152a) having an output shaft (158a), for actuating an application tool (154a), and having at least one torque limiting unit (10a; 10b) having a first clutch element (120a; 120b) which meshes with a transmission element (146a) of the drive shaft (148a), a second clutch element (170a; 170b) which meshes with a transmission element (156a) of the output shaft (158a), and a third clutch element (172a; 172b) which serves for coupling the first clutch element (120a; 120b) and the second clutch element (170a; 170b) and is connected to the second clutch element (170a; 170b) for conjoint rotation, wherein the torque limiting unit (10a; 10b) is provided to limit a torque between the drive unit (144a) and the output unit (152a) in a drive train (12a) of the hammer drill and/or chipping hammer in at least one operating state, wherein the third clutch element (172a; 172b) has at least two force transmission means (14a-28a, 30a-44a; 14b, 36b) which are provided to transmit the torque in at least one operating state, and wherein the at least two force transmission means (14a-28a, 30a-44a; 14b, 36b) have different transmission characteristics, **characterized in that**, to form the different transmission characteristics, the at least two force transmission means (14a-28a, 30a-44a; 14b, 36b) have different directions of action (48a, 50a; 48b, 50b), wherein, to receive and to guide the at least two force transmission means (14a-28a, 30a-44a; 14b, 36b), the third clutch element (172a; 172b) has in each case at least one radial guide channel (176a-190a) as a radial recess and at least one axial guide channel (192a-206a) as an axial recess, and, to limit the transmitted torque, the force transmission means (14a-28a, 30a-44a; 14b, 36b) each have a latching element (52a-82a; 52b, 74b) mounted in the guide channels (176a-190a), and an energy storage element (84a-98a, 106a; 84b, 116b) such that the energy storage element (84a-98a; 84b) pushes the at least one radially mounted latching element (52a-66a; 52b) in a substantially form-fitting manner in each case into a radial latching recess (126a-140a) of a radial engagement contour (122a; 122b) of the first clutch element (120a; 120b), and the energy storage element (106a; 116b) pushes the at least one axially mounted latching element (68a-82a; 74b) in a substantially form-fitting manner in each case into an axial latching recess (142a; 142b) of an axially acting engagement contour (124a) of the first clutch element (120a; 120b).

2. Hammer drill and/or chipping hammer according to Claim 1, **characterized in that**, to form the different transmission characteristics, the force transmission means (14a-28a, 30a-44a; 14b, 36b) have at least partially different latching elements (52a-66a, 68a-82a; 52b, 74b), which are provided to transmit the torque for substantially form-fitting engagement.

3. Hammer drill and/or chipping hammer according to Claim 2, **characterized in that** the latching elements (52a-66a, 68a-82a; 52b, 74b) of the at least two force transmission means (14a-28a, 30a-44a; 14b, 36b) have at least partially different shapes.

4. Hammer drill and/or chipping hammer according to one of the preceding claims, **characterized in that**, to form the different transmission characteristics, the force transmission means (14a-28a, 30a-44a; 14b, 36b) have at least partially different energy storage elements (84a-98a, 106a; 84b, 116b).

5. Hammer drill and/or chipping hammer according to Claim 4, **characterized in that** the energy storage elements (84a-98a, 106a; 84b, 116b) of the at least two force transmission means (14a-28a, 30a-44a; 14b, 36b) have different spring constants.

6. Hammer drill and/or chipping hammer according to one of the preceding claims, **characterized in that** the torque limiting unit (10a; 10b) has at least one further force transmission means (14a-28a, 30a-44a; 14b, 36b) which has a transmission characteristic that is the same as one of the at least two force transmission means (14a-28a, 30a-44a; 14b, 36b).

## Revendications

1. Marteau perforateur et/ou marteau-piqueur comprenant une unité d'entraînement (144a) présentant un arbre d'entraînement (148a), une unité de prise de force (152a) présentant un arbre de prise de force (158a) pour actionner un outil d'insertion (154a) et au moins une unité de limitation de couple (10a ; 10b) comprenant un premier élément d'accouplement (120a ; 120b) qui s'engrène avec un élément de transmission (146a) de l'arbre d'entraînement (148a), un deuxième élément d'accouplement (170a ; 170b), qui s'engrène avec un élément de transmission (156a) de l'arbre de prise de force (158a), et un troisième élément d'accouplement (172a ; 172b) qui sert à accoupler le premier élément d'accouplement (120a ; 120b) et le deuxième élément d'accouplement (170a ; 170b) et qui est connecté de manière solidaire en rotation au deuxième élément d'accouplement (170a ; 170b), l'unité de limitation de couple (10a ; 10b) étant prévue, dans au moins un état de fonctionnement, pour limiter, dans une chaîne cinématique (12a) du marteau perforateur et/ou du marteau piqueur, un couple entre l'unité d'entraînement (144a) et l'unité de prise de force (152a), le troisième élément d'accouplement (172a ; 172b) présentant au moins deux moyens de transfert de force (14a-28a, 30a-44a ; 14b, 36b), lesquels sont prévus, dans au moins un état de fonctionnement, pour transmettre le couple, et les au moins deux moyens de transfert de force (14a-28a, 30a-44a ; 14b, 36b) présentant des caractéristiques de transfert différentes, **caractérisé en ce que** les au moins deux moyens de transfert de force (14a-28a, 30a-44a ; 14b, 36b), pour réaliser les caractéristiques de transfert différentes, présentent des directions d'actions différentes (48a, 50a ; 48b, 50b), le troisième élément d'accouplement (172a ; 172b), pour recevoir et guider les au moins deux moyens de transfert de force (14a-28a, 30a-44a ; 14b, 36b), présentant à chaque fois au moins un canal de guidage radial (176a-190a) en tant qu'évidement radial et au moins un canal de guidage axial (192a-206a) en tant qu'évidement axial et les moyens de transfert de force (14a-28a, 30a-44a ; 14b, 36b), pour limiter le couple transmis, présentant à chaque fois un élément d'encliquetage (52a-82a ; 52b, 74b) supporté dans les canaux de guidage (176a-190a) et un élément accumulateur de force (84a-98a, 106a ; 84b, 116b), de telle sorte que l'élément accumulateur de force (84a-98a ; 84b) presse l'au moins un élément d'encliquetage supporté radialement (52a-66a ; 52b) essentiellement par engagement par correspondance de formes à chaque fois dans un évidement d'encliquetage radial (126a-140a) d'un contour d'engagement radial (122a ; 122b) du premier élément d'accouplement (120a ; 120b) et que l'élément accumulateur de force (106a ; 116b) presse l'au moins un élément d'encliquetage supporté axialement (68a-82a ; 74b) essentiellement par engagement par correspondance de formes à chaque fois dans un évidement d'encliquetage axial (142a ; 142b) d'un contour d'engagement agissant axialement (124a) du premier élément d'accouplement (120a ; 120b).

2. Marteau perforateur et/ou marteau-piqueur selon la revendication 1, **caractérisé en ce que** les moyens de transfert de force (14a-28a, 30a-44a ; 14b, 36b), pour réaliser les caractéristiques de transfert différentes, présentent des éléments d'encliquetage au moins en partie différents (52a-66a, 68a-82a ; 52b, 74b), qui sont prévus pour transmettre le couple pour un engagement essentiellement par correspondance de formes.

3. Marteau perforateur et/ou marteau-piqueur selon la revendication 2, **caractérisé en ce que** les éléments d'encliquetage (52a-66a, 68a-82a ; 52b, 74b) des au moins deux moyens de transfert de force (14a-28a, 30a-44a ; 14b, 36b) présentent des formes au moins en partie différentes.

4. Marteau perforateur et/ou marteau-piqueur selon l'une quelconque des revendications précédentes, **caractérisé en ce que** les moyens de transfert de force (14a-28a, 30a-44a ; 14b, 36b), pour la réalisation des différentes caractéristiques de transfert, présentent des éléments accumulateurs de force au moins en partie différents (84a-98a, 106a ; 84b, 116b).

5. Marteau perforateur et/ou marteau-piqueur selon la revendication 4, **caractérisé en ce que** les éléments accumulateurs de force (84a-98a, 106a ; 84b, 116b) des au moins deux moyens de transfert de force (14a-28a, 30a-44a ; 14b, 36b) présentent des constantes de ressort différentes.

6. Marteau perforateur et/ou marteau-piqueur selon l'une quelconque des revendications précédentes, **caractérisé en ce que** l'unité de limitation de couple (10a ; 10b) présente au moins un élément de transfert de force supplémentaire (14a-28a, 30a-44a ; 14b, 36b) qui présente une caractéristique de transfert identique à celle de l'un des au moins deux moyens de transfert de force (14a-28a,-30a-44a ; 14b, 36b).
